(19) Europäisches Patentamt

European Patent Office

Office européen des brevets

(11) EP 2 079 573 B1

(12) **EUROPEAN PATENT SPECIFICATION**

(45) Date of publication and mention
of the grant of the patent:
**27.11.2013 Bulletin 2013/48**

(51) Int Cl.:
***B29C 47/00*** *(2006.01)*  ***F16L 11/08*** *(2006.01)*
***B32B 1/08*** *(2006.01)*

(21) Application number: **07875163.3**

(22) Date of filing: **17.10.2007**

(86) International application number:
**PCT/IB2007/004720**

(87) International publication number:
**WO 2009/013567 (29.01.2009 Gazette 2009/05)**

(54) **REINFORCED COMPOSITE POLYETHYLENE PIPE AND A METHOD OF MANUFACTURING SAME**

VERSTÄRKTES ROHR AUS POLYETHYLENVERBUNDMATERIAL UND VERFAHREN ZU DESSEN HERSTELLUNG

TUYAU DE POLYÉTHYLÈNE COMPOSITE RENFORCÉ ET PROCÉDÉ DE FABRICATION DE CELUI-CI

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **27.10.2006 US 863213 P
16.10.2007 US 872834**

(43) Date of publication of application:
**22.07.2009 Bulletin 2009/30**

(73) Proprietor: **Dameka Finance Limited
Nicosia 2406 (CY)**

(72) Inventors:
• **GORILOVSKIY, Miron
Moscow 123060 (RU)**
• **SHMELEV, Alexander
Moscow 117335 (RU)**

(74) Representative: **Benatov, Emil Gabriel et al
Dr. Emil Benatov & Partners
Asen Peykov Str. No. 6
1113 Sofia (BG)**

(56) References cited:
**GB-A- 2 245 678    US-A1- 2005 238 832**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 079 573 B1

**Description**

BACKGROUND OF THE INVENTION

The present invention relates generally to a flexible pipe construction that is capable of transporting fluid at elevated temperatures and pressures. More specifically, the present invention relates to a flexible pipe construction having a fluid transmission core of cross-linked polyethylene (PEX) pipe that includes at least one layer of reinforcement fiber disposed on the outer surface thereof, wherein the reinforcement is formed from inorganic or organic fibers and an outer cover layer to encase and protect the reinforcement fibers.

There is a trend in the piping industry towards the use of flexible polymer pipe materials for industrial applications as well as for the distribution of utilities. It is highly desirable to utilize polymer pipe materials in such applications because the enhanced flexibility properties of the materials allow the piping to be formed in comparatively long lengths thereby reducing the overall number of mechanical joints needed and ultimately reducing the time required for installation. As a result, installations employing flexible polymer piping typically has a lower cost for manufacture and installation as compared to traditional steel, copper or ductile iron pipes that have been previously utilized in such applications.

One type of pipe that has enjoyed particularly widespread usage is cross-linked polyethylene pipe or PEX, as it is commonly known in the industry. PEX pipe is highly flexible, thereby allowing it to be easily installed by drawing it from a spool and pulling it into the desired location. The primary difficulty with PEX however is that exposure to increased temperature can cause the pipe wall to soften and elevated pressures can cause the pipe walls to rupture. One solution to the above noted problems has been to increase the PEX wall thickness, although the increase in wall thickness results in a reduction of overall flexibility of the pipe ultimately limiting the number of suitable applications for the product. In addition, the increased wall thickness has negative effect on the production process throughput, economics and a potential for the increase in manufacturing defects such as internal pipe wall cracking.

Another solution to the temperature and pressure issues raised above has been provided through the reinforcement of the PEX pipe in order to increase its strength and resistance to elevated temperature fluids without increasing the polymer wall thickness. In some thin-walled flexible reinforced pipe applications, reinforcing elements are provided essentially in an axial direction and are preferably applied over the entire exterior periphery of the thin inner tube. Reinforcing often consists of wire turns and parallel strips made of relatively hard thermoplastic or elastomeric material that is in turn wound helically over the reinforcing elements. The inner tube, strips and outer tube are connected firmly to one another. The reinforcing elements may consist of strips of PVC reinforced with textile threads. Often these PVC strips are connected to the other PVC components of the tube, so that the strips appear as a continuous layer in the tube wall. However, in production, the tube must remain in place on the mandrel over which the inner tube is extruded thereby employing the mandrel for the absorption of the winding stresses that the application of the stiff reinforcing strips or wire turns generate.

Another method of manufacturing a thin-walled tube with spiral armoring has been proposed which avoids the known disadvantages discussed above. By this method, the thin-walled tube is fed through a cylindrical guide while the tube is maintained under internal pressure. Spiral armoring is wound onto the outside of the guide and several turns of the armoring are accumulated on the guide. Pressure is applied lengthwise of the guide against the last accumulated turn, so that as the tube leaves the guide, the foremost turn slides off the guide onto the periphery of the tube. However, it has been shown that even relatively slight fluctuations in the internal pressure of the inner tube can have an adverse effect on the regularity of the armor turns therefore requiring expensive pressure regulation during the armoring process.

In addition to the absorption of the winding stresses by the inner tube, a further problem is the bonding of the reinforcing material to the inner tube. The reinforcing is typically bonded to the pipe by applying heat to activate a heat sensitive adhesive. However, an adverse effect may be encountered when bonding the spiral armor and the outer tube to the inner tube if too high a temperature is used for reactivating the adhesive that is disposed on either the inner tube or the supporting spiral. The adverse effect is that since the inner tube is under internal pressure, the application of too much heat may allow deformation of the wall of the inner tube thereby allowing the inner tube to expand outwardly between the turns of the supporting spiral and in an extreme case even burst. The finished tube thus exhibits permanent buckling and a rough texture on the inner surface of the inner tube wall. An additional problem is that if the temperature for bonding is too low there will not be sufficient adhesion between the inner tube, the supporting spiral and the outer tube. Should a manufacturer use a low temperature adhesive to overcome the above noted difficulties with high temperature adhesive, the finished tube then cannot be used in an application requiring the transmission of high temperature fluids. This results in a substantial restriction to the practical use of such tubes that are thus not permitted to carry hot water for a long period of time.

The prior art also includes a process for producing a composite tube consisting of a woven-fabric tube with an inner tube made of rubber or plastic, in which the inner casing is coated with adhesive and is fed continuously to the woven-fabric tube during the operation of weaving the latter, and is carried along in the woven-fabric tube. The tube blank formed in this way is heated over a heating stage to activate the adhesive. During the heating operation, the inner tube is subjected to internal pressure, thereby expanding the tube. However, this production process is relatively slow and expensive because of the operation of weaving the woven-fabric tube. Furthermore, the woven-fabric tube builds up to a considerable extent, so that the tube wall is relatively thick.

It is therefore an object of the present invention to produce a reinforced thin walled PEX piping material without the need for a production mandrel or for controlling the internal pressure of the pipe during reinforcing. It is a further object of the present invention to provide a reinforced PEX pipe that includes a reinforced wall that is both pressure resistant and heat resistant while retaining its lightweight characteristics and overall flexibility.

BRIEF SUMMARY OF THE INVENTION

In this regard, the present invention provides for a thin walled cross-linked polyethylene (PEX) pipe assembly having a reinforcing material disposed around an exterior wall thereof. The PEX pipe is extruded using the normal manufacturing process. Once the PEX is formed it is drawn through an opening in a thread guide. The thread guide holds a plurality of continuous reinforcing fibers that are applied to the exterior surface of the PEX pipe as it passes through the opening. The thread guide applies the plurality of fibers in a particular pattern with specifically calculated angles of woven design as will be described in more detail below. The pattern used for the application of the fibers allows for uniform three-dimensional (axial and radial) tensile properties so as to achieve optimum reinforcement of the pipe wall without significantly increasing the thickness of the wall or the weight of the PEX pipe.

In the preferred embodiment as will be described in detail below, the reinforcing fibers may be any organic or non-organic fiber and are more preferably formed from an aramid fiber. The fiber pattern may be wound, spun or woven onto the exterior surface provided that the resultant reinforcement has uniform three-dimensional reinforcing properties as described above. Further, the piping construction of the present invention may also include a cover layer applied over the reinforcing fibers to protect the fibers and allow additional adhesion of outer layers such as insulation and an outer cover.

It is therefore an object of the present invention to provide a cross-linked polyethylene piping having a reinforcing layer about an outer surface thereof wherein the outer surface exhibits uniform three-dimensional reinforcing properties. It is a further object of the present invention to provide a reinforced cross-linked polyethylene piping that exhibits improved performance in both high temperature and high-pressure applications. It is still a further object of the present invention to provide a reinforced cross-linked polyethylene piping that is capable of withstanding high pressure and high temperature applications while maintaining the desired level of flexibility that has long been associated with such piping. Finally, it is another object of the present invention to provide a cross-linked polyethylene piping that includes both a reinforcing layer and an insulation layer disposed about an outer surface thereof that exhibits improved performance in both high temperature and high-pressure applications.

These together with other objects of the invention, along with various features of novelty that characterize the invention, are pointed out with particularity in the claims annexed hereto and forming a part of this disclosure. For a better understanding of the invention, its operating advantages and the specific objects attained by its uses, reference should be had to the accompanying drawings and descriptive matter in which there is illustrated a preferred embodiment of the invention.

BRIEF DESCRIPTION OF THE DRAWINGS

In the drawings which illustrate the best mode presently contemplated for carrying out the present invention:

FIG. 1 is a perspective view of the piping assembly of the present invention;
FIG. 2 is a perspective view of the piping assembly of Fig. 1 with an insulation and protective layer formed thereon;
FIG. 3 is a view of the reinforcing threads being applied to the outer surface of the PEX fluid transmission piping; and
FIG. 4 is a figure depicting the manner of calculation for the patter in which the reinforcing fibers are applied to the PEX fluid transmission piping.

DETAILED DESCRIPTION OF THE INVENTION

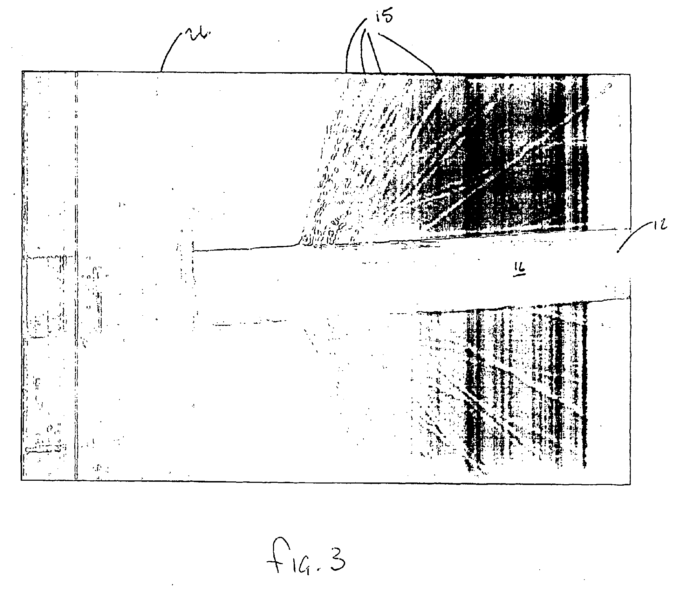

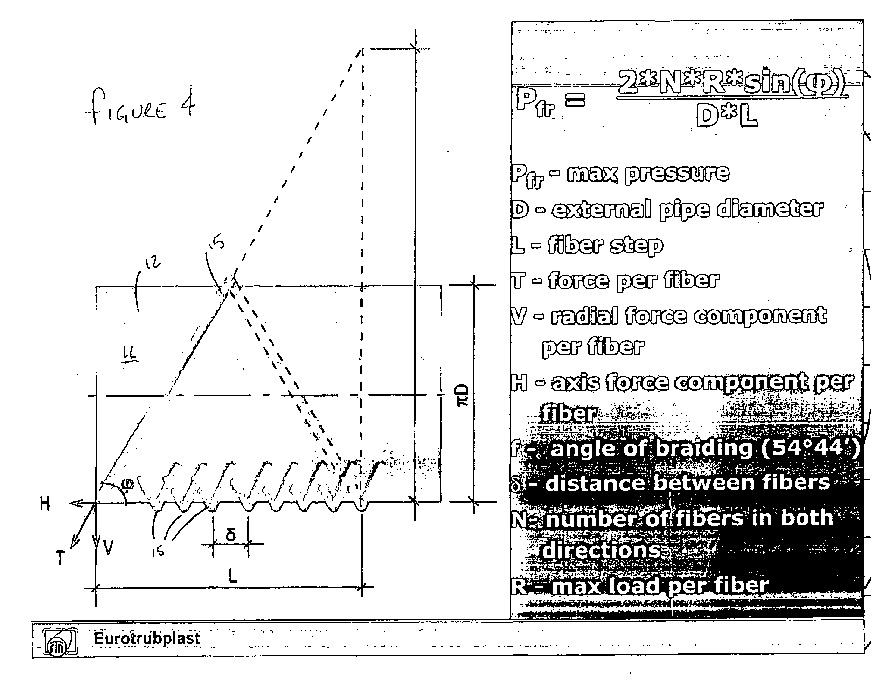

Now referring to the drawings, piping assembly of the present invention is shown and generally illustrated in Figs . 1 and 2, while the assembly method is depicted at Fig. 3 and the manner is which the reinforcement pattern is calculated is shown at Fig. 4. As can be seen, the piping assembly 10 generally includes at least one fluid transmission pipe 12, a reinforcing layer 14 applied to an outer surface 16 of the pipe 12 and a cover layer 18 applied over the reinforcing layer 14 to protect the reinforcing layer 14 from damage.

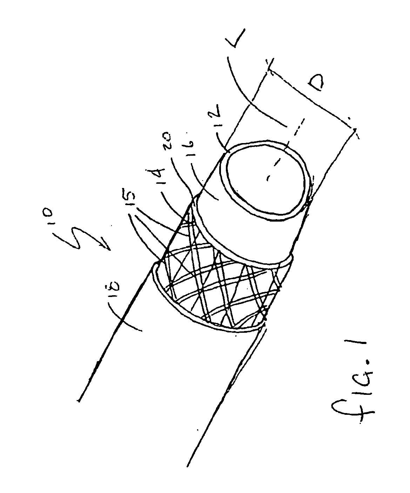

Turning now to Fig. 1, in accordance with the present invention, it is preferred that the at least one fluid transmission pipe 12 be formed from a cross-linked polyethylene (PEX) material. More particularly it is preferred that the fluid transmission pipe 12 be a thin walled PEX material in that thin walled PEX is generally more flexible and does not encounter the wall cracking issues that are faced when attempting to extrude thick walled PEX as in the prior art. In the scope of the present invention, the PEX piping 12 is formed in the same traditional extrusion process as is well known in the art and therefore there is no need for further discussion of that process herein. The PEX piping 12 has an outer surface 16 defined by the exterior of the piping wall and has an outside diameter D defined as the maximum dimension as taken perpendicular to two opposing sides of the exterior surface thereof. Further, the PEX pipe 12 defines a longitudinal axis L that extends along the running length of the PEX pipe 12 and is substantially parallel to the walls thereof.

The present invention provides for a reinforcing layer 14 that is formed from a matrix of continuous reinforcing fibers 15 to be disposed and arranged on the exterior surface 16 of the PEX piping 12. The fibers 15 may be any suitable organic or inorganic reinforcing fiber as are known in the art. It is preferable that the reinforcing fibers 15 utilized in the present invention are aramid fibers, commonly known as Kevlar®. The use of aramid fibers allows maximum reinforcing with minimized build up of thickness about the exterior surface 16 of the PEX piping 12 and the smallest amount of additional weight. The arrangement of the reinforcing fibers 15 about the exterior surface 16 of the fluid transmission pipe 12 is an important feature of the invention as will be discussed in greater detail below. Generally, the pattern of the reinforcing fibers 15 is calculated and arranged to provide reinforcement equally both parallel and transverse the longitudinal axis L of the PEX pipe 12. In other words, the pattern of the reinforcing fiber 15 provides a uniform three-dimensional distribution of the forces thereby distributing the overall force equally in both the horizontal and vertical dimensions along the PEX pipe 12. The fiber pattern may be wound, spun or woven onto the exterior surface provided that the resultant reinforcement has uniform three-dimensional reinforcing properties as described above. A thin cover layer 18 is applied over the outer surface of the PEX pipe 16 and the matrix of reinforcing fibers 15. The thin cover 18 material serves to protect the reinforcing fibers 15 against breakage and snagging as the piping assembly 10 is installed. It is important that the cover material in this layer be thin because when applying mechanical ferrules at the ends of the piping assembly 10 in preparation of joining, the ferrules need to compress tightly against the reinforcing fibers 15 to prevent them from creeping out of the joint. Often, in the prior art, the fibers 15 crept out of the mechanical joint ferrule over time, resulting in failure or bursting of the PEX pipe 12 immediately adjacent the ferrule. The present invention, in addition to employing a thin cover layer 18 also provides for lengthening of the ferrule and mechanical joint assembly to ensure retention of the ends of the reinforcing fibers 15. To further enhance the piping assembly 10 and ease the manufacture thereof the present invention may also include an adhesive layer 20 on the exterior surface 16 of the PEX piping 16 and/or on the interior surface of the cover layer 18 that is applied over the reinforcing fibers 15. Such adhesive layers 20 assist in maintaining the fiber reinforcing 14 in the correct positioning and ensure that the piping assembly 10 remains intact over time.

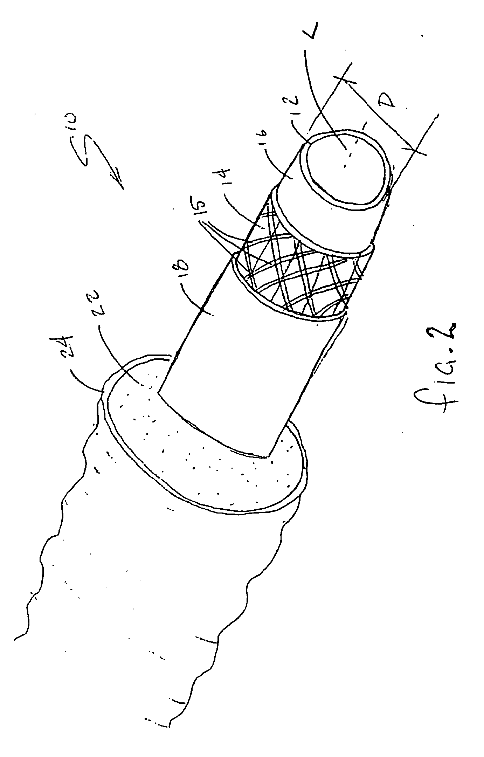

Turning to Fig. 2, the cover layer 18 may be any suitable material and is preferably a polyethylene material. This ensures that the material is suitable for use in connection with the PEX fluid transmission pipe 12 as well as with an outer expanded polyurethane foam material 22 that may be applied on top of the cover layer 18 to serve as an insulation of the piping assembly 10. Further, the pipe assembly 10 may include an outer armor layer 24 or protective jacket that encases the foam material 22 and prevents damage thereto.

As depicted at Fig. 3, in manufacture, the method pf providing the piping assembly 10 in accordance with the present invention provides for extruding the PEX fluid transmission pipe 12 using the normal manufacturing process. Once the PEX 12 is formed it is drawn through an opening in a thread guide 26. The thread guide 26 holds a plurality of continuous reinforcing fibers 15 that are applied to the exterior surface 16 of the PEX pipe 12 as it passes through the opening. The thread guide 26 applies the plurality of reinforcing fibers 15 in a particular pattern with specifically calculated angles relative to the longitudinal axis L of the PEX pipe 12 to provide the desired uniform three-dimensional (axial and radial) tensile properties so as to achieve optimum reinforcement of the pipe wall without significantly increasing the thickness of the wall or the weight of the PEX pipe 12. While numerous fiber angles may be suitable and still fall within the scope of the present invention, it is preferred that the angle be between 50° and 60°. More preferably, the angle of the reinforcing fibers relative to the longitudinal axis of the fluid transmission pipe is 54°44'.

While the fibers 15 may be applied to the PEX pipe 12 either by winding or weaving, as was stated above, in determining the pattern for the application of the reinforcing fibers 15 to the exterior surface 16 of the PEX piping 12 it is important that that fibers 15 be placed with precision to ensure equal distribution of forces both axially and radially around the pipe. As is depicted at Fig. 4, in accordance with the present invention, the pattern of reinforcing fibers 15 is determined by the following equation:

$$P_{fr} = 2 * N * R * \sin(\phi) / D * L$$

where:

$P_{fr}$ represents a maximum pressure within the pipe,
N represents a total number of fibers in both directions,
R represents a maximum load value per fiber,
$\phi$ represents an angle of the fibers relative to the longitudinal axis of the pipe,
D represents a diameter of said outer surface of said pipe, and
L represents a fiber step distance.

The resulting composite pipe assembly 10 in accordance with the teachings of the present invention remains highly lightweight and flexible while having an optimized amount of added weight and thickness. Other benefits of forming the composite pipe 10 in the manner described above include increased pressure and temperature ratings as compared to the PEX pipe of the prior art, without significant pipe rigidity increase. The composite pipe 10 of the present invention is both pressure rated for an operating pressure of up to 10 bars (145psi) and temperature rated for up to 95°C (200°F) applied at the same time. For these reasons, the instant invention is believed to represent a significant advancement in the art, which has substantial commercial merit.

**Claims**

1.  A reinforced piping assembly (10) comprising:

    at least one fluid transmission pipe (12) having an outer surface (16) and a longitudinal axis;
    a matrix of continuous reinforcing fibers (15) overlying said outer surface (16) of said pipe (12), wherein said fibers (15) are arranged in a pattern that provides reinforcement equally both parallel and transverse to said longitudinal axis; and
    a cover layer (18) applied over said matrix of continuous reinforcing fibers (15),
    wherein said pattern of reinforcing fibers is determined by the following equation:

    $$P_{fr} = 2 * N * R * \sin(\varphi) / D * L$$

    where:

    $P_{fr}$ represents a maximum pressure within the pipe (12),
    N represents a total number of fibers in both directions,
    R represents a maximum load value per fiber,
    $\varphi$ represents an angle of the fibers relative to the longitudinal axis of the pipe,
    D represents a diameter of said outer surface (16) of said pipe (12), and
    L represents a fiber step distance.

2.  The piping assembly of claim 1, wherein said fluid transmission pipe (12) is formed from cross-linked polyethylene material.

3.  The piping assembly of claim 1or 2, wherein said continuous reinforcing fibers (15) are aramid fibers.

4.  The piping assembly of claim 3, wherein said aramid fibers (15) are woven onto said outer surface (16) of said fluid transmission pipe.

5.  The piping assembly of claim 2 or 3, wherein said aramid fibers (15) are wound onto said outer surface (16) of said fluid transmission pipe.

6.  The piping assembly of any one of the preceding claims, wherein said reinforcing fibers are applied over an adhesive layer (20) residing on said outer surface (16) of said fluid transmission pipe (12).

7.  The piping assembly of any one of the preceding claims, further comprising:

    a layer of polyurethane foam insulation (22) disposed about said cover layer; and
    a protective jacket layer (24) disposed about said layer of foam (22).

8. The piping assembly of any one of the preceding claims, wherein said reinforcing fibers (15) are applied to said pipe (12) at an angle of 54°44' relative to said longitudinal axis of said fluid transmission pipe (12).

9. A method of manufacturing a reinforced piping assembly comprising :

extruding at least one cross-linked polyethylene fluid transmission pipe (12) having an outer surface (16) and a longitudinal axis;
applying a matrix of continuous aramid reinforcing fibers (15) overlying said outer surface (16) of said pipe (12), wherein said fibers (15) are arranged in a pattern that provides reinforcement equally both parallel and transverse to said longitudinal axis; and
applying a cover layer (18) applied over said matrix of continuous reinforcing fibers (15),
wherein said pattern of reinforcing fibers is determined by the following equation:

$$P_{fr} = 2 * N * R * \sin(\varphi) / D * L$$

where:

$P_{fr}$ represents a maximum pressure within the pipe (12),
N represents a total number of fibers in both directions,
R represents a maximum load value per fiber,
$\varphi$ represents an angle of the fibers relative to the longitudinal axis of the pipe,
D represents a diameter of said outer surface (16) of said pipe (12), and
L represents a fiber step distance.

**Patentansprüche**

1. Verstärkte Rohrleitung (10), umfassend:

wenigstens ein Fluidübertragungsrohr (12) mit einer Außenfläche (16) und einer Längsachse;
ein Muttergewebe von fortlaufenden Verstärkungsfasern (15) über der Außenfläche (16) des Rohres (12), wobei die Fasern (15) in einem Raster angeordnet sind, das gleichermaßen Verstärkung sowohl parallel als auch quer zu der Längsachse liefert, und
eine Deckschicht (18), die über das Muttergewebe der fortlaufenden Verstärkungsfasern (15) aufgetragen ist, wobei das Raster von Verstärkungsfasern durch die folgende Gleichung bestimmt wird :

$$P_{fr} = 2 * N * R * \sin(\varphi) / D * L$$

WO:

$P_{fr}$ den maximalen Druck in dem Rohr (12) darstellt,
N die Gesamtzahl der Fasern in beiden Richtungen darstellt,
R die maximale Lastwert pro Faser darstellt,
$\varphi$ den Winkel der Fasern, relativ zu der Längsachse des Rohres darstellt,
D den Durchmesser der Außenfläche (16) des Rohrs (12) darstellt, und
L die Faserschrittweite darstellt.

2. Die Rohrleitung nach Anspruch 1, wobei das Fluidübertragungsrohr (12) aus vernetztem Polyethylen gebildet ist.

3. Die Rohrleitung nach Anspruch 1 oder 2 , wobei die fortlaufenden Verstärkungsfasern (15) Aramidfasern sind.

4. Die Rohrleitung nach Anspruch 3, wobei die Aramidfasern (15) auf der Außenfläche (16) des Fluidübertragungsrohrs verwoben sind.

5. Die Rohrleitung nach Anspruch 2 oder 3, wobei die Aramidfasern (15) auf der Außenfläche (16) des Fluidübertragungsrohrs gewickelt sind.

6. Die Rohrleitung nach einem der vorhergehenden Ansprüche, wobei die Verstärkungsfasern über eine Klebstoffschicht (20) angeordnet sind, die auf der Außenfläche (16) des Fluidübertragungsrohrs (12) aufgetragen ist.

7. Die Rohrleitung nach einem der vorhergehenden Ansprüche, ferner umfassend:

   eine Isolationsschicht aus Polyurethanschaum (22), die über der Deckschicht aufgelegt ist, und
   eine Schutzmantelschicht (24), die um die Schaumschicht (22) aufgelegt ist.

8. Die Rohrleitung nach einem der vorhergehenden Ansprüche, wobei die Verstärkungsfasern (15) um das Rohr (12) in einem Winkel von 54° 44' relativ zu der Längsachse des Fluidübertragungsrohrs (12) angelegt sind.

9. Verfahren zur Herstellung einer verstärkten Rohrleitung , umfassend:

   Extrudieren von mindestens einem Fluidübertragungsrohr (12) aus vernetztem Polyethylen mit einer Außenfläche (16) und einer Längsachse;
   Aufbringen eines Muttergewebe von fortlaufenden Aramid-Verstärkungsfasern (15) über der Außenfläche (16) des Rohres (12), wobei die Fasern (15) in einem Raster angeordnet sind, das gleichermaßen Verstärkung sowohl parallel als auch quer zu der Längsachse liefert, und
   Aufbringen einer Deckschicht (18), die über das Muttergewebe der fortlaufenden Verstärkungsfasern (15) aufgetragen ist,
   wobei das Raster von Verstärkungsfasern durch die folgende Gleichung bestimmt wird:

$$P_{fr} = 2 * N * R * \sin(\varphi) / D * L$$

   WO:

   $P_{fr}$ den maximalen Druck in dem Rohr (12) darstellt,
   N die Gesamtzahl der Fasern in beiden Richtungen darstellt,
   R die maximale Lastwert pro Faser darstellt,
   $\varphi$ den Winkel der Fasern, relativ zu der Längsachse des Rohres darstellt,
   D den Durchmesser der Außenfläche (16) des Rohrs (12) darstellt, und
   L die Faserschrittweite darstellt.

**Revendications**

1. Un ensemble (10) de tuyauterie renforcée comprenant:

   au moins une conduite de transmission de fluide ayant une surface extérieure et un axe longitudinal ;
   une matrice constituée de fibres de renforcement continues (15) recouvrant ladite surface extérieure (16) du tube (12) où lesdites fibres (15) sont rangées selon un system qui permet un renforcement de l'axe longitudinal dans les directions comme parallèle ainsi que transversale ; et
   une couche couvrante (18) appliquée sur ladite matrice constituée de fibres de renforcement continues (15), où ledit system de rangement des fibres continues de renforcement est déterminé par l'équation suivante :

$$P_{fr} = 2 * N * R * \sin(\varphi) / D * L$$

   où :

   $P_{fr}$ représente la pression maximale dans l'intérieur du tube 12,
   N représente le nombre total des fibres dans les deux directions,

R représente la valeur de charge maximale par fibre,

φ représente l'angle des fibres par rapport à l'axe longitudinal du tube (12)

D représente le diamètre de ladite surface extérieure (16) du tube (12) ; et

L représente la distance de pas entre les fibres.

2.  Ensemble de tuyauterie selon la revendication 1 où ledit tube de transmission du fluide (12) est formé à partir de matériel à la base de polyéthylène réticulé.

3.  Ensemble de tuyauterie selon les revendications 1 ou 2 où lesdites fibres de renforcement (15) sont des fibres d'aramide.

4.  Ensemble de tuyauterie selon la revendication 3 où lesdites fibres d'aramide (15) sont tissées sur ladite surface extérieure (16) du tube de transmission de fluide.

5.  Ensemble de tuyauterie selon les revendications 2 ou 3 où lesdites fibres d'aramide (15) sont tissées sur ladite surface extérieure (16) du tube de transmission de fluide.

6.  Ensemble de tuyauterie selon l'une des revendications précédentes où lesdites fibres de renforcement sont appliquées sur une couche adhésive (20) disposée sur ladite surface extérieure (16) dudit tube de transmission de fluide (12).

7.  Ensemble de tuyauterie selon l'une des revendications précédentes, comprenant en outre : une couche de polyuréthane en mousse (22) située autour de ladite couche de recouvrance ; et une couche protectrice (24) située autour de ladite couche de mousse (22).

8.  Ensemble de tuyauterie selon l'une des revendications précédentes où lesdites fibres de renforcement (15) sont appliquées sur ledit tube (12) selon un angle de 54°44' par rapport à l'axe longitudinal du tube (12) de transmission de fluide.

9.  Procède de production d'un ensemble de tuyauterie renforcée comprenant :

    extrusion au moins d'un tube (12) de transmission de fluide de polyéthylène réticulé ayant une surface extérieure (16) et un axe longitudinal ;

    appliquant une matrice constituée de fibres (15) de renforcement d'aramide qui couvrent ladite surface extérieure (16) dudit tube (12) où lesdits fibres (15) sont rangées selon un system qui permet un renforcement de l'axe longitudinal dans les directions comme parallèle ainsi que transversale ; et

    une couche couvrante (18) appliquée sur ladite matrice constituée de fibres de renforcement continues (15), où ledit system de rangement des fibres continues de renforcement est déterminé par l'équation suivante :

    $$P_{fr} = 2 * N * R * \sin(\varphi) \,/\, D * L$$

    où :

    $P_{fr}$ représente la pression maximale dans le tube 12,

    N représente le nombre total des fibres dans les deux directions,

    R représente la valeur de charge maximale par fibre,

    φ représente l'angle des fibres par rapport à l'axe longitudinal du tube (12)

    D représente le diamètre de ladite surface extérieure (16) du tube (12) ; et

    L représente la distance de pas entre les fibres.

FIG. 1

fig.2

FIG. 3

FIGURE 4

$$P_{fr} = \frac{2*N*R*\sin(\varphi)}{D*L}$$

$P_{fr}$ – max pressure

D – external pipe diameter

L – fiber step

T – force per fiber

V – radial force component per fiber

H – axis force component per fiber

f – angle of braiding (54°44′)

δ – distance between fibers

N – number of fibers in both directions

R – max load per fiber

Eurotrubplast

EP 2 079 573 B1